(19) Europäisches Patentamt
European Patent Office
Office européen des brevets

(11) Publication number: **0 119 494**
**A1**

# (12) EUROPEAN PATENT APPLICATION

(21) Application number: **84101739.5**

(22) Date of filing: **20.02.84**

(51) Int. Cl.³: **C 05 G 3/08**, C 07 F 9/22, C 07 F 9/24

(30) Priority: **16.03.83 US 475980**
**16.03.83 US 475990**
**16.03.83 US 475989**

(43) Date of publication of application: **26.09.84**
**Bulletin 84/39**

(84) Designated Contracting States: **DE FR GB IT NL**

(71) Applicant: **ALLIED CORPORATION, Columbia Road and Park Avenue P.O. Box 2245R (Law Dept.), Morristown New Jersey 07960 (US)**

(72) Inventor: **Swerdloff, Michael Dennis, 1480 Route 46 Apt. 308-B, Parsippany New Jersey 07054 (US)**
Inventor: **Van Der Puy, Michael, 16 Fairelm, Cheektowaga New York 14227 (US)**
Inventor: **Kolc, Jaroslav Fitzgerald, 16 Logan Road, Randolph Township New Jersey 07869 (US)**
Inventor: **Rogic, Milorad Mihailo, 32 Sunset Drive, Whippany New Jersey 07981 (US)**
Inventor: **Anello, Louis Gene, 5076 Lake Shore Road, Hamburg New York 14074 (US)**
Inventor: **Hendrickson, Larry Lee, 100 West Way, Camillus New York 13031 (US)**

(74) Representative: **Baillie, Iain Cameron et al, c/o Langner Parry Isartorplatz 5, D-8000 München 2 (DE)**

## (54) Urease inhibited urea based fertilizer compositions containing phosphorus compounds.

(57) The invention relates to novel urease inhibited fertilizer compositions containing urea and a urease inhibiting amount of phosphoro compounds, and methods and composition for inhibiting the activity of urease through use of such compounds.

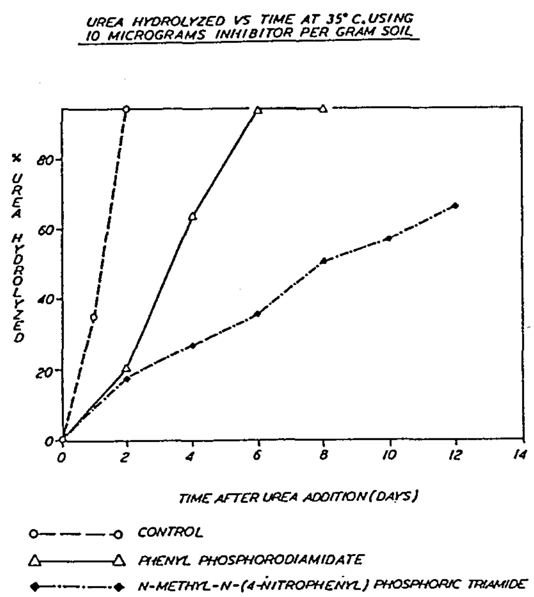


EP 0 119 494 A1

ACTORUM AG

0119494

# UREASE INHIBITED UREA BASED FERTILIZER COMPOSITIONS CONTAINING PHOSPHORUS COMPOUNDS

## BACKGROUND OF THE INVENTION

### 1. Field of the Invention

This invention relates to urease inhibited urea based fertilizer compositions. More particularly, this invention relates to urease inhibited urea based fertilizer compositions which contain certain phosphorous compounds as the urease inhibitors, and to methods and compositions for inhibiting the action of soil urease through use of such compounds.

### 2. The Prior Art

It is well known in the art to use urea and urea compositions in fertilizers, for application to the soil. The effective life of such fertilizers, however, is of short duration wherever microbiological activity exists in the soil to which the fertilizer is applied. This is due to the fact that urea is hydrolyzed rapidly, and nitrogen is lost in the form of ammonias, when urea is placed under or on the surface of moist soil which contains urease. Urease, a crystallizable enzyme occurring in numerous bacteria and fungi, as for example Micrococcus urease, catalyzes the conversion of urea into ammonia and carbon dioxide. The reactions are as follows:

$$CO(NH_2)_2 + 2H_2O \xrightarrow{\text{Urease}} 2NH_3 + H_2CO_3$$

$$2NH_3 + H_2O \longrightarrow NH_4^+ + OH^-$$

A portion of the ammonia thus formed is held by absorbing constituents of the soil and is available to plants as nutrient. However, a large amount of the ammonia may be lost to the air. A further problem resulting from the action of urease is that the accumulation of ammonium in the soil and rise in problems, including damage to germinating seedlings and young plants.

One approach to reduction of problems resulting from the activity of soil urease toward soil applied

urea is to find compounds that inhibit urease activity when applied to soils in conjunction with fertilizer urea. This approach has received considerable attention, and several classes of compounds have been used as urease inhibitors.

For example, certain prior art describes various phosphoro compounds which are useful as urease inhibitors. Illustrations of such prior art are East German Patent No. 142,714; 212,026; 122,177; 122,621 and 130,936, and Great Britain Patent No. 1,494,774 describe various phosphorodiamidate compounds as urease inhibitors. Also exemplary of such prior art is U.S. Patent No. 4,242,325 which describes a method of controlling the enzymatic decomposition of urea to ammonia and carbonic acid due to the action of urease which comprises exposing the enzyme to certain phosphorotriamide compounds. U.S. Patent No. 4,182,881 describes the use of certain N-[diaminophosphinyl]arylcarboxyamide compounds as inhibitors of the enzyme urease in the urinary tract. U.S. Patent No. 4,225,526 describes the use of 8-[(4-aminophenyl)sulfonyl]amino-2-napthalenyl phosphorodiamidate compounds as inhibitors of the enzyme urease, and U.S. Patent No. 4,222,948 describes the use of [(4-aminophenyl)sulfonyl]amino]phenyl phosphorodimidates as inhibitors of the enzyme urease.

Still other prior art describes phosphoric triamide compounds which are useful for other purposes as for example, as flame proofing agents. For example, Great Britain Patent No. 830,800 describes certain phosphoric triamides which are useful as flame proofing agents.

SUMMARY OF THE INVENTION

In accordance with the present invention, there is provided a unique fertilizer composition comprising urea or a compound which is capable of forming urea when subjected to the use conditions of the composition and a urease inhibiting amount of one or more phosphoric triamide compounds of the formula:

$$R_5 - \underset{NR_1R_2}{\overset{\overset{X}{\|}}{\underset{|}{P}}} - NR_3R_4$$

wherein:

X is oxygen or sulfur;

$R_1$, $R_2$, $R_3$ and $R_4$ are individually hydrogen or alkyl having from 1 to 4 carbon atoms.

$R_5$ is $-NR_6R_7$, $-OR_8$ or $-NR_9R_{10}$, wherein

$R_6$ is alkyl, alkenyl, alkynyl, cycloalkyl, cycloalkenyl or aralkyl;

$R_7$ is heterocycle, aryl or substituted aryl having one or more substituents selected from the group consisting of trihalomethyl, alkyl, halogen, phenoxy, isocyanato, phenyl, nitro, cyano, amino, alkylamino, dialkylamino, alkoxy, arylmercapto, mercapto, alkylcarbonyl, isocyano, alkylmercapto, arylcarbonyl, carboxy, carbonamide, alkylcarboxy, $(NH_2)_2P(O)O-$, $(NH_2)_2P(O)NH-$, and $H_2NSO_2-$;

$R_8$ is alkyl, aralkyl, cycloalkyl, heterocycle, cycloalkenyl, alkenyl or alkynyl either unsubstituted or substituted with one or more halo, hydroxy, thiocyano, heterocycle, alkylamino, dialkylamino, alkoxy, nitro, isocyano, quaternary ammonium, arylamino, alkanoyl, trihalomethyl, aryloxy, cyano, amino, isocyanato, acyloxy, $-ONO_2$, $-SO_2OH$, mercapto, arylmercapto, alkylmercapto, carboxyalkyl, $-OPO(OH)_2$, $-OB(OH)_2$ or $-OPO(OR)OH$, $-OPO(OR)_2$, $-OSO_2OR$, $-SO_2R$, and $-OSO_2R$, wherein R is aliphatic or aryl, or a combination thereof;

$R_9$ is alkyl substituted with one or more "nucleophilic substituents"; and

$R_{10}$ is $R_9$, hydrogen, or substituted or unsubstituted cycloalkenyl, alkenyl, alkynyl, cycloalkyl, aralkyl, alkyl, aryl or alkaryl wherein permissible substituents are one or more trihalomethyl, alkyl, halogen, naphthoxy, phenoxy, arylcarbonyl, phenyl, nitro, cyano, amino, alkylamino, dialkylamino, arylmercapto, alkoxy, mercapto, alkylmercapto,

alkylcarbonyl, alkoxycarbonyl, arylcarbonyl, carboxy, arylamino, diarylamino, or carbonamide groups. Hereinafter, the aforementioned compounds are referred to as "phosphoro compounds".

"Nucleophilic substituents" are well known to those of skill in the chemical arts and as used herein are groups which are Lewis bases which can donate electrons. Such groups are described in great detail in March, Jerry, "Advanced Organic Chemistry: Reactions, Mechanisms and Structure", McGraw-Hill Book Company, Inc., 1968, pp. 199 and 200, and Hine, Jack, "Physical Organic Chemistry", McGraw-Hill Book Company, Inc., 1956, pp. 46 and 47, and 86 to 88.

Another aspect of this invention relates to a method of enhancing the yield of plants which comprises applying the composition of this invention to a plant growth medium within reach of the plant's root system, (hereinafter referred to as "root zone"). The term "plant growth medium" as herein employed refers to various natural and artificial media which support plant growth, including soil, potting mixtures of organic and inorganic matter, and artificial media such a polyurethane foams.

Yet another aspect of this invention relates to a method of inhibiting the action of urease against urea applied to a plant growth medium containing the said urease, which method comprises applying to said medium a "urease inhibiting effective amount" of one or more phosphoro compounds. Still another aspect of this invention relates to a composition comprising a "urease inhibiting effective amount" of one or more phosphoro compounds, which composition is useful for carrying out the aforementioned method. As used herein "urease inhibiting effective amount" is an amount of one or more of the said phosphoro compounds which when admixed with urea (or a compound capable of forming urea *in situ* under the use conditions of the compound) or applied to a plant growth medium before, after or in conjunction

with application of urea or one or more urea precursor compounds to the said plant growth medium is capable of inhibiting the catalytic activity of urease that may be in the medium to any extent.

It has been discovered by distributing a urease inhibiting effective amount of one or more of the phosphoro compounds in a plant growth medium the urease catalyzed hydrolysis of urea to ammonia is suppressed thereby preventing the rapid loss of urea from the medium. Furthermore, by proper distribution of the one or more phosphoro compounds this action of inhibiting the urease catalyzed hydrolysis of urea to ammonia is effective over a prolonged period of time.

BRIEF DESCRIPTION OF THE DRAWING

Figure 1 is a graph of urea hydrolyzed vs. time at 35°C using 10 micrograms of the urease inhibitor N-methyl-N-(4-nitrophenyl) phosphoric triamide per gram of soil.

Figure 2 is a graph of urea hydrolyzed as a function of time at 35°C using 10 micrograms of the urease inhibitor N-(2-chloroethyl) phosphoric triamide.

DETAILED DESCRIPTION OF THE INVENTION

The application and/or distribution of a urease inhibiting effective amount of one or more of the above-identified phosphoro compounds to a plant growth medium is essential for the practice of this invention. Preferably, the amount of the phosphoro compounds employed is sufficient to inhibit the urease catalyzed hydrolysis of substantially all urea present in the composition. Usually, an acceptable level of urease inhibition can be achieved if the composition contains at least about 0.01 parts by weight of said one or more phosphoro compounds per one million parts by weight of soil or other plant growth medium. Hereinafter the abbreviation "p.p.m." is used to refer to parts by weight of one or more phosphoro compounds per one million parts by weight of plant growth medium. In the preferred embodiments of this invention, the amount ot

said one or more phosphoro compounds distributed in the said medium is from about 0.01 p.p.m. to about 5,000 p.p.m., and in the particularly preferred embodiments of the invention is from about 0.2 p.p.m. to about 1,000 p.p.m. Amongst these particularly preferred embodiments of the invention, most preferred are those embodiments of the invention in which the amount of said one or more phosphoro compounds distributed in said medium is from about 1 p.p.m. to about 500 p.p.m.

Within the aforementioned limitations, the preferred amounts of the one or more phosphoro compounds impregnated or distributed in the plant growth medium are dependent upon the particular situation. Thus in determining the amount to be employed, consideration is made not only of the treatment need, i.e., soil pH, temperature, soil type, etc., but also of the mode of application to soil. When the one or more phosphoro compounds are to be applied in a broadcast application, the amount in p.p.m. may frequently be less than in row or band application where, for a substantial depth and width within the vicinity of application, there can be a very high concentration of the one or more such compounds. When application is made near the root zone or growing plants or when application is made immediately prior to seeding or transplanting, the amounts supplied are frequently at a lower rate than when application is made at the end of the growing season to prepare the soil for the following season. By dispersing very large dosages in growth media, a prolonged inhibition of urease activity can be obtained over a period of many months. The concentration of the one or more phosphoro compounds is eventually reduced to a minimum by decomposition in the soil.

In one method for carrying out the present invention, one or more phosphoro compounds are distributed throughout the plant growth media in a broadcast application such as by spraying, dusting, distributing in irrigation water and the like. In such application,

the one or more phosphoro compounds are supplied in amounts sufficient to permeate the growing area of soil with a urease inhibiting effective amount of such phosphoro compounds. In field administration, the one or more phosphoro compounds can be distributed in the plant growth medium in the amount and through such cross-section of the medium as to provide for the presence therein of a urease inhibiting effective amount of the one or more phosphoro compounds. It is usually preferred that the one or more phosphoro compounds be distributed in the plant growth medium to a depth of at least two inches below the surface of the plant growth medium.

In another method for carrying out the present invention, one or more phosphoro compounds are administered to growth medium in a band or row application. In such application, administration is made with or without carrier in amounts sufficient to supply to soil or growth medium a urease inhibiting effective amount of the one or more phosphoro compounds. After administration with or without discing or dragging, subsequent irrigation or rainfall distributes the one or more phosphoro compounds throughout the plant growth medium.

In one embodiment of the present invention, the one or more phosphoro compounds are distributed throughout the growth media prior to seeding or transplanting the desired crop plant.

In another embodiment, the soil are the root zone of growing plants is treated with the one or more phosphoro compounds in an amount effective to inhibit the action of urease, but sublethal to plant growth. By following such practice, no adverse effect is exerted by the one or more phosphoro compounds upon growth of seeds or plants. Oftentimes, it is desirable to treat the soil adjacent to plants, and this procedure may be carried out conveniently in side-dressing operations.

In a further embodiment of the invention, soil or other plant growth medium is treated with one or more

phosphoro compounds following harvest or after, following to prevent rapid loss of urea, and to prevent buildup of soil urease. Such practice conserves the soil nitrogen for the following growing season. In such application, the upper limit is primarily an economic consideration.

In an additional embodiment, the soil or plant growth medium is impregnated with the one or more phosphoro compounds in conjunction with the application of urea or one or more urea precursor compounds capable of forming urea _in situ_ on application to the plant growth medium. Urea is a well known, commercially available compound and will not be discussed herein in detail. Illustrative of compounds which are believed to form urea on addition to the soil and are water soluble and formaldehyde condensation products, as for example methylolureas, methyleneureas and mixtures thereof. These products and a method for their preparation is described in detail in Justice U.S. Patent No. 3,462,256. Still other useful sources of urea are water-insoluble urea formaldehyde condensation products such as ureaform. Illustrative of useful water-insoluble urea and formaldehyde condensation products are those whose preparation and use are described in detail in U.S. Patent Nos. 3,677,746 and 4,033,745.

The amount of urea or urea precursor compound included in the composition of this invention is not critical to the unique advantages thereof, and any amount known to those of skill in the art for use in fertilizers can be used. Normally, the amount employed will vary widely depending on a number of factors, including the times and frequency of application. In the preferred embodiments of the invention, the quantity of urea or urea precursor compound may vary from about 0.5 to about 95 weight percent based on the total weight of the composition and in the particularly preferred embodiments may vary from about 1 to about 50 weight percent on the same basis. In the most preferred embodiments of this invention, the quantity of urea or urea precursor compound will vary from about 3 to about 40 weight percent on the aforementioned basis.

The fertilizer composition of this invention may include other optional ingredients known to those of skill in the art for inclusion in fertilizer compositions. For example, the composition may include sources of potassium, sulfur, phosphorus, boron, zinc, iron, manganese, copper, molybdenum, cobalt and like micronutrient and macronutrients which may be deficient in the soil. The composition may also include plant growth regulators, as for example auxins, cytokinins and the like, as well as pesticides, such as insecticides, miticides, herbicides, nematocides and the like. Moreover, the fertilizer composition can include sources of nitrogen other than urea, as for example ammonium nitrate and the like, and other materials which increase nitrogen efficiency as for example other urease inhibitors and nitrification inhibitors.

The present invention can be carried out by distributing one or more phosphoro compounds in an unmodified form through a plant growth medium. The present method also embraces distributing one or more such compounds as a constituent in liquid or finely divided solid compositions. In such practice, the one or more phosphoro compounds can be modified with one or more additiments or soil treating adjuvants including water, petroleum distillates or other liquid carriers, surface-active dispersing agents, and inert finely divided solids. Preferred adjuvants are surface-active dispersing agents, and inert finely divided solids; these adjuvants cooperate with the one or more phosphoro compounds so as to facilitate the practice of the present invention and to obtain an improved result. Depending upon the concentration of the one or more phosphoro compounds augmented compositions can be distributed in the soil without further modification or can be considered as concentrates and subsequently

diluted with additional inert carrier to produce the ultimate treating composition. The urease inhibiting effective amount of the one or more phosphoro compounds can be supplied to growth media in from about from 1 to about 50 gallons of organic solvent carrier, in from about 5 to about 27,000 or more gallons of aqueous carrier or in from about 20 to 2000 pounds of solids carrier per acre treated. When an organic solvent carrier is employed, it can be further dispersed in the above volume of aqueous liquid carrier.

The concentration of one or more phosphoro compounds in compositions to be employed for the treatment of growth media is not critical and can vary considerably provided the required dosage of effective agent is supplied to the growth media. In general, good results are obtained with liquid and/or solid compositions containing at least about 0.00001 percent by weight of the one or more phosphoro compounds. Usually, however, the weight percent of one or more phosphoro compounds is from about 0.0001 percent to about 98 percent by weight of one or more phosphoro compounds by weight on the same basis. In the preferred embodiments of the invention, the amount of the one or more phosphoro compounds in the composition is from about 0.002 to about 50 weight percent, and in the particularly preferred embodiments is from about 0.01 to about 20 weight percent on the aforementioned basis. Liquid or dust compositions in which the one or more phosphoro compounds is present in higher concentration can be utilized as such or can be employed as concentrate compositions to be diluted to prepare actual treating compositions.

Liquid compositions containing the desired amount of the one or more phosphoro compounds can be prepared by dispersing the latter in one or more liquid carriers such as water or an organic solvent with or without the aid of a suitable surface active dispersing agent or emulsifying agent. Suitable organic solvents include

acetone, di-isobutylketone, methanol, ethanol, isoproyl alcohol, diethyl ether, toluene, methylene chloride, chlorobenzene and the petroleum distillates. The preferred organic solvents are those which are of such volatility that they leave little permanent residue in the growth media. Dispersing and emulsifying agents which can be employed in liquid compositions include condensation products of alkylene oxides with phenols and organic acids, alkyl aryl sulfonates, polyoxyalkylene derivatives or sorbitol ester, sugar esters, complex ether alcohols, mahogany soaps and the like. The surface active agents are generally employed in the amount of from about 1 to about 20 percent by weight of one or more phosphoro and preferably in an amount of from about 1 to about 10 on the same basis.

Solid compositions containing the active one or more phosphoro compounds can be prepared by dispersing the latter in finely divided inert solid carriers such as talc, chalk, gypsum, vermiculite, bentonite and the like, fuller's earth, attapulgite and other clays, various solid detergent dispersing agents and solid fertilizer compositions. In preparing such compositions, the carrier is mechanically ground with a solid one or more phosphoro compounds or wet with a liquid one or more phosphoro compounds or a solution of dispersion of a solid or liquid one or more phosphoro compounds in a volatile organic solvent. Depending upon the proportions of ingredients, these compositions can be employed without further modification or be considered concentrates and subsequently further diluted with solid surface active dispersing agent, talc, chalk, gypsum, bentonite, diatomaceous earth, fullers earth, or the like to obtain the desired treating composition. Furthermore, such concentrate compositions can be dispersed in water with or without added dispersing agent or agents to prepare aqueous soil treating compositions.

While the composition and method of this invention

are particularly suited for agricultural applications for prevention or inhibition of urease catalyzed hydrolysis of urea, they can also be used in other applications where inhibition of the activity of urease is desired. For example, such other applications include use in animal litters, as feed additives, diaper treatment pharmaceutical applications, urease inhibition in mammalian urinary tracks, and the like. It should be noted that the particular active compound employed in one application may not necessarily be useful in another application. Thus, in the selection of a particular active material for use in an application, such factors as toxicity of the material, the environment in which the material will be used, level of urease inhibition desired and the like must be considered in selecting such material.

Phosphoro compounds which are useful as urease inhibitors in the fracture of this invention are those of the formula:

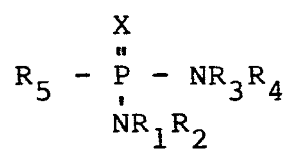

wherein:

X is sulfur or oxygen;

$R_1$, $R_2$, $R_3$ and $R_4$ are individually hydrogen or alkyl having from about 1 to about 4 carbon atoms.

$R_5$ is $-NR_6R_7$, $-OR_8$ or $-NR_9R_{10}$, wherein

$R_6$ is alkyl, alkenyl, alkynyl, aralkyl, cycloalkyl or cycloalkenyl;

$R_7$ is heterocycle, aryl or aryl substituted with one or more substituents selected from the group consisting of trihalomethyl, aryloxy, alkyl, halogen, alkylcarboxy, phenoxy, nitro, cyano, amino, alkylamino, dialkylamino, alkoxy, arylmercapto, mercapto, isocyanato, alkylmercapto, alkylcarbonyl, isocyano $(NH_2)_2P(O)NH-$, $H_2NSO_2-$, 3-pyridyl, 2-furyl, benzyl and

cinnamenyl;

$R_8$ is alkyl, aralkyl, cycloalkyl, heterocycle, cycloalkenyl, alkenyl or alkynyl either unsubstituted or substituted with one or more halo, hydroxy, thiocyano, heterocycle, alkylamino, dialkylamino, alkoxy, nitro, isocyano, quaternary ammonium, arylamino, alkanoyl, trihalomethyl, aryloxy, cyano, amino, isocyanato, acyloxy, $-ONO_2$, $-SO_2OH$, mercapto, arylmercapto, alkylmercapto, carboxyalkyl, $-OPO(OH)_2$, $-OB(OH)_2$ or $-OPO(OR)OH$, $-OPO(OR)_2$, $-OSO_2OR$, $-SO_2R$, and $-OSO_2R$, wherein R is aliphatic or aryl, or a combination thereof;

$R_9$ is alkyl substituted with one or more "nucleophilic substituents"; and

$R_{10}$ is $R_9$, hydrogen, or substituted or unsubstituted cycloalkenyl, alkenyl, alkynyl, cycloalkyl, aralkyl, alkyl, aryl or alkaryl wherein permissible substituents are one or more trihalomethyl, alkyl, halogen, naphthoxy, phenoxy, arylcarbonyl, phenyl, nitro, cyano, amino, alkylamino, dialkylamino, arylmercapto, alkoxy, mercapto, alkylmercapto, alkylcarbonyl, alkoxycarbonyl, arylcarbonyl, carboxy, arylamino, diarylamino, or carbonamide groups.

Examples of useful $R_1$, $R_2$, $R_3$ and $R_4$ substituents are hydrogen, methyl, ethyl, propyl, isopropyl, butyl, isobutyl and the like.

Illustrative of permissible $R_6$ substituents are methyl, ethyl, acetylene, propyl, isopropyl, butyl, isobutyl, allyl, pentyl, neopentyl, hexyl, heptyl. ethyl, propenyl, 2-butenyl, 3-pentenyl, 2-hexenyl, benzyl, 1-phenylpropyl, and the like.

Exemplary of useful $R_7$ substituents are naphthyl; heterocycle, such as 3-pyridyl and 2-furyl, phenyl, and substituted phenyl such as alkoxyphenyl as for example 2-methoxyphenyl, 3-ethoxyphenyl, 2,4-dimethoxyphenyl, and the like; alkylphenyl, as for example 2,4-dimethylphenyl, 4-ethylphenyl, 4-tert-butylphenyl, 2-methyl-4-ethylphenyl and the like; halophenyl as for

example 4-chlorophenyl, 2-chloro-4-bromo phenyl, 4-idophenyl, 3-fluorophenyl and the like; 4-carboxyphenyl; alkyl- or aryl mercapto phenyl as for example 2-methyl-mercaptophenyl, 4-phenylmercaptophenyl, 2-ethylmercapto phenyl, 4-aminophenyl, and the like; amino, alkylamino, dialkylamino and phenylamino as for example 4-methylaminophenyl, 2,4-dimethylaminophenyl, 4-phenylaminophenyl and the like; and alkyl- and aryl carbonyl, as for example 4-acetylphenyl, 4-benzoylphenyl and the like;

Illustrative of permissible $R_8$ substituents are unsubstituted or substituted straight and branched chain alkyl such as 2-chloroethyl, 3-chloropropyl, 4-chlorobutyl, methyl, 3-iodopropyl, 2-cyanoethyl, iodomethyl, 2-phenoxyethyl, 3-bromopentyl, 5-chloropentyl, 2-meth-oxyneopentyl, 2-iodo-2-phenylethyl, 4-isopropoxyethyl, benzyl, 2-naphthoxyethyl, 2,2-dichloropropyl, 3-mercaptobutyl, 2-acetylpropyl, ethyl, 2-cyanoethyl, 3-phenoxypropyl, 2-hydroxyethyl, 2-phenylmercaptoethyl, and the like; substituted or unsubstituted straight and branched chain alkenyl, such as allyl, 2-propenyl, 2-chloroprop-2-enyl, 1-chloro-prop-2-enyl, 2-cyano-but-3-enyl, trichlorovinyl, dichlorovinyl, dichloroallyl, trichloroallyl, 3-methoxypent-4-enyl, 1-iodo-2,2-dimethylprop-2-enyl, and the like; and substituted straight and branched chain alkynyl such as acetylene, 2-chloroprop-2-yl, 3-bromoprop-2-yl, propynyl, and the like; substituted and unsubstituted cycloalkyl and cycloalkenyl such as cyclobutyl, cyclohexyl, cyclopentyl, cyclohexenyl, 2-chlorocyclohexyl, 3-cyano-cyclopentyl, 2,2-difluorocyclohexenyl, 2-hydroxycyclohexyl and the like; and aralkyl such as benzyl, 2-phenylethyl, 2-phenylpropyl, 2-naphthylethyl, 3-phenylbutyl, 4-phenylhexyl and the like.

Illustrative of permissible $R_9$ substituents are chloromethyl, 2,2-dichloroethyl, 2,2-dibromopropyl, 1-chloromethylethyl, 3,3-diiodobutyl, 2,2-dichloromethyl ethyl, 2,2,3,3-tetrachloropropyl, 2-phenoxyethyl,

2-cyanoethyl, 5-chloropentyl, 4-phenoxyhexyl, 2-iodo-2-phenylethyl, 2-acetylpropyl, 3-mercaptobutyl, 2-(p-toluenesulfonyl)ethyl, 2-benzenesulfonylpropyl, 2-(ethylsulfonyl)propyl, and the like.

Exemplary of useful $R_{10}$ substituents are the aforementioned $R_9$ substituents, hydrogen, methyl, ethyl, propyl, isopropyl, butyl, isobutyl, pentyl, neopentyl, hexyl, 2-butene, ethylene, 3-butene, 2-propene, acetylene, cyclopropyl, cyclobutyl, cyclopentyl, cyclohexyl, 2-nitroethyl, 5-halopentyl, 1-cyanoethyl, 2-dimethylaminopropyl, 3-methylaminobutyl, phenyl, 4-chlorophenyl, 3-pyridyl, 2-furyl, 2-naphthyl, benzyl, 3-nitrophenyl, 4-nitrophenyl, 4-halophenyl, 4-aminophenyl, 4-alkylphenyl, 4-alkoxyphenyl, 2-methylphenyl, 2,3-dimethylphenyl, 2,4-dimethylphenyl, 2,4,6-trimethylphenyl, 3-trifluoromethylphenyl, 4-cyanophenyl, 3-phenoxyphenyl, and the like.

The following compounds are illustrative of phosphoro compounds which can be employed in the practice of this invention.

2-bromoethyl phosphoric triamide
2-chloroethyl phosphorothioic triamide
mercaptobutyl phosphoric triamide
N-(2-morpholinoethyl) phosphoric triamide
N-[2-(N-morpholinoethyl) phosphoric triamide
ethyl 4-(diaminophosphinyl) aminobutyrate
N-(2-phenoxyethyl)-N-methyl phosphoric triamide
N,N-Bis-(2-fluoroethyl) phosphoric triamide
3-thiocyanopropyl phosphoric triamide
N-(2-chloroethyl)-N-phenyl-N'-methyl phosphoric triamide
N-(2-chloroethyl) phosphoric triamide
N,N-Bis-(2-chloroethyl) phosphoric triamide
N-(3-bromopropyl) phosphoric triamide
N-(2,2,2-trichloroethyl) phosphoric triamide
N-(2,2-dichloroethyl) phosphoric triamide
N-(2-cyanoethyl) phosphoric triamide
N-(2-chloroethyl)-N-methyl phosphoric triamide
N-(2-chloroethyl)-N'-methyl phosphoric triamide

N-(2-methylmercaptoethyl) phosphoric triamide
N-(3-methoxypropyl) phosphoric triamide
N-[2-(dimethylamino)ethyl] phosphoric triamide
N-(4-phenoxybutyl) phosphoric triamide
N-[2-(3,4-dihydroxyphenyl)ethyl] phosphoric triamide
N-[2-(3,4-dimethoxyphenyl)ethyl] phosphoric triamide
N-(2-phenylethyl) phosphoric triamide
N-(2-methoxybenzyl) phosphoric triamide
N-(2-chloroethyl(-N-ethyl phosphoric triamide
N-(3-bromopropyl)-N-(4-methoxyphenyl) phosphoric triamide
N-(2-chloroethyl)-N-benzyl phosphoric triamide
N,N-Bis(3-bromopropyl) phosphoric triamide
N-(2-chlorocyclohexyl) phosphoric triamide
N-[2-(2-methoxyphenylethyl) phosphoric triamide
N-[2-(4-methoxyphenylethyl) phosphoric triamide
N-(2-phenoxyethyl) phosphoric triamide
N-(3-chlorododecyl) phosphoric triamide
N-(2-chlorohexyl) phosphoric triamide
N-(3-bromooctyl) phosphoric triamide
N-(2-idohexyl) phosphoric triamide
N-(perfluorobutyl) phosphoric triamide
N-(2-bromo-3-fluorohexyl phosphoric triamide
N-(2,3-dichlorobutyl) phosphoric triamide
N-(4-chlorobutyl) phosphoric triamide
N-(2,2,3,3-tetrachlorodecyl) phosphoric triamide
N-(2,2-dichloro-3-bromooctyl) phosphoric triamide
N-(2,2,2-trichlorovinyl) phosphoric triamide
N-(3-hexylmercaptopropyl) phosphoric triamide
N-(2-naphthyloxyisopropyl) phosphoric triamide
N-(2-mercaptoethyl) phosphoric triamide
N-(4-nitrophenyl)-N-3-chloropropyl phosphoric triamide
N-[2-(N-methylamino)]-N-benzyl phosphoric triamide
N-(2-hydroxyethyl)-N-(3-pyridyl) phosphoric triamide
N-(2-ethoxyloxoethyl)-N-(2-naphthyl) phosphoric triamide
N-(3-trifluoromethylphenyl)-N-(2,2-dichloroethyl) phosphoric triamide
N-(4-methylmercaptophenyl ethyl) phosphoric triamide

N,N-Bis-(4-methylmercaptophenylethyl) phosphoric triamide

N-(2 4-dimethylphenyl)-N-(3-cyanohexyl) phosphoric triamide

N-(2,4,6-trimethylphenyl)-N-(3-isocyanooctyl) phosphoric triamide

N-cyclohexyl-N-(2-chloroethyl) phosphoric triamide

N-(2,2-difluoroethyl) phosphoric triamide

N-2-[N-piperidylpropyl) phosphoric triamide

N-cyclohexyl-N-phenyl phosphoric triamide

N-cyclopropyl-N-(4-nitrophenyl) phosphoric triamide

N-methyl-N-(4-chlorophenyl) phosphoric triamide

N-propyl-N-(4-mercaptophenyl) phosphoric triamide

N-propenyl-N-(2,3-dimethylphenyl) phosphoric triamide

N-cyclopenyl-N-(4-aminophenyl) phosphoric triamide

N-methyl-N-naphthyl phosphoric triamide

N-methyl-N-(2-piperidinyl) phosphoric triamide

N-methyl-N-(β-pyrrolidinyl) phosphoric triamide

N-hexyl-N-(4-dimethylaminophenyl) phosphoric tramide

N-butyl-N-(3-methylaminophenyl) phosphoric triamide

N-benzyl-N-(4-phenylmercaptophenyl) phosphoric triamide

N-(2-phenylethyl)-N-phenyl phosphoric triamide

N-(5-phenylpentyl)-N-(2-triazinyl) phosphoric triamide

N-(cyclohexyl)-N-(4-hydroxyphenyl) phosphoric triamide

N-(allyl)-N-(3-acetylphenyl) phosphoric triamide

N-(ethyl)-N-(2,4-dimethoxyphenyl) phosphoric triamide

N-(3-hexenyl)-N-(4-acetamidophenyl) phosphoric triamide

N-(acetylene)-N-(4-trifluoromethylphenyl) phosphoric triamide

N-(3-cyclohexenyl)-N-(3-acetoxyphenyl) phosphoric triamide

N-(propyl)-N-(2,4-dichlorophenyl) phosphoric triamide

N-(ethyl)-N-(4-biphenylcarbonylphenyl) phosphoric triamide

N-cyclohexyl-N-(2,3-difluorophenyl) phosphoric triamide

N-(methyl)-N-(2,3-dibromophenyl) phosphoric triamide

N-(4-hexynyl)-N-(3-mercaptophenyl) phosphoric triamide

N-(methyl-N-(4-phenoxyphenyl) phosphoric triamide

N-(methyl)-N-(2,3-dinitrophenyl) phosphoric triamide
N-(ethyl)-N-(4-aminophenyl) phosphoric triamide
N-(isopropyl)-N-(3-cyanophenyl) phosphoric triamide
N-(methyl)-N-(2-chloro-4-nitrophenyl) phosphoric triamide
N-(benzyl)-N-(4-methylaminophenyl) phosphoric triamide
N-(butyl-N-(2-methyl-4-methoxyphenyl) phosphoric triamide
N-(methyl)-2-trichloromethyl-4-chlorophenyl phosphoric triamide
N-(hexyl)-N-(4-ethoxyphenyl) phosphoric triamide
N-(methyl)-N-(2-oxazinyl) phosphoric triamide
N-(methyl)-N-(3-oxazolidinyl) phosphoric triamide
N-(methyl)-N-(4-oxathiazinyl) phosphoric triamide
N-(ethyl)-N-(3-thiazinyl) phosphoric triamide
N-(methyl)-N-(2-thiazolidinyl) phosphoric triamide
N-(methyl)-N-(naphthyl) phosphoric triamide
N-(propyl)-N-(4-phenylmercaptophenyl) phosphoric triamide
N-methyl-N-(5-methylmercapto-3-triazolyl) phosporic triamide
N-(methyl)-N-(4-dimethylaminophenyl) phosphoric triamide
N-(ethyl-N-(3-diazinyl) phosphoric triamide
N-ethyl-N-(2,3,4-triaminophenyl) phosphoric triamide
N-isopropyl-N-phenyl phosphoric triamide
N-methyl-N-(2-pyridyl) phosphoric triamide
N-isobutyl-N-(3-quinolinyl) phosphoric triamide
N-methyl-N-(2-pyrimidyl) phosphoric triamide
N-methyl-N-(5,6,7,8-tetrohydronaphthylenyl) phosporic triamide
N-methyl-N-(4-quinaldinyl) phosphoric triamide
N-methyl-N-pyrazinyl phosphoric triamide
N-*tert*-butyl-N-phenyl phosphoric triamide
N-methyl-N-(3-trichloromethyl-5-thiadiazolidyl) phosphoric triamide
N-*sec*-butyl-N-phenyl phosphoric triamide
N-methyl-N-(3-picolinyl) phosphoric triamide
N-ethyl-N-(5-nitropyridinyl) phosphoric triamide

N-octyl-N-phenyl phosphoric triamide
N-oleyl-N-phenyl phosphoric triamide
N-(1-isopentenyl)-N-(2,4-dimethoxyphenyl) phosphoric triamide
N-propargyl-N-phenyl phosphoric triamide
N-allyl-N-phenyl phosphoric triamide
N-methyl-N-2-[(3-methyl-(5-trichloromethyl)triazinyl] phosphoric triamide
2-phenylthioethyl phosphorodiamidate
2-phenoxyethyl phosphorodiamidate
2-cyanoethyl phosphorodiamidate
2-(dimethylamino)ethyl phosphorodiamidate
2-(phenacyl)ethyl phosphorodiamidate
1-chloro-2-propenyl phosphorodiamidate
2-(phenylsulfonyl)ethyl diamidophosphorothionate
2-nitroethyl N-methyl phosphorodiamidate
hydroxymethyl phosphorodiamidate
2-chloroethyl phosphorodiamidate
methoxymethyl phosphorodiamidate
benzyl phosphorodiamidate
hexyl phosphorodiamidate
2-propenyl phosphorodiamidate
4-hexenyl phosphorodiamidate
cyclohexenyl phosphorodiamidate
cyclopentenyl phosphorodiamidate
3-naphthylpropyl phosphorodiamidate
2-(2,3-dimethylphenyl)ethyl phosphorodiamidate
(2,4-dichlorophenyl)methyl phosphorodiamidate
(4-trifluoromethylphenyl) methyl phosphorodiamidate
2-hexanoylethyl phosphorodiamidate
3-chloro-2-propenyl phosphorodiamidate
3-chloro-2-propenyl phosphorodiamidate
2-(4-methoxyphenyl)ethyl phosphorodiamidate
dichloromethyl diamidophosphorothionate
trichloromethyl diamidophosphorothionate
2,2-difluoroethyl diamidophosphorothionate
3-hydroxy-2-chloropropyl diamidophosphorothionate
2-(4-mercaptophenyl) ethyl diamidophosphorothionate

2-(4-phenylthiophenyl) propyl phosphorodiamidate
(4-phenoxyphenyl) methyl phosphorodiamidate
3-cyanopropyl diamidophosphorothionate
2-phenoxyethyl diamidophosphorothionate
2-acetylpropyl phosphorodiamidate
2-phenylmercaptoethyl diamidophosphorothionate
2-chloropropyl phosphorodiamidate
2,2-diiodopropyl diamidophosphorothionate
2,2-difluoroethyl phosphorodiamidate
cyclopentyl phosphorodiamidate
cyclopropyl phosphorodiamidate
2-propynyl phosphorodiamidate
3-chloro-2-propynyl diamidophosphorothionate
3-phenylpropyl phosphorodiamidate
3-thienyl phosphorodiamidate
3-pyridyl phosphorodiamidate
2-pyrrolidyl diamidophosphorothionate
2-furyl phosphorodiamidate
3-furyl phosphorodiamidate
3-pyranyl phosphorodiamidate
furfuryl phosphorodiamidate
2-furoyl phosphorodiamidate
imidazolyl diamidophosphorothionate
imidazolidyl phosphorodiamidate
indanylmethyl phosphorodiamidate
2-(indenyl) ethyl phosphorodiamidate
3-(indolyl) propyl phosphorodiamidate
isobutoxymethyl phosphorodiamidate
isoamoxyethyl diamidophosphorothionate
2-(isobutyryl)propyl diamidophosphorothionate
isocyanomethyl phosphorodiamidate
3-isocyanatopropyl phosphorodiamidate
2-oxazolyl phosphorodiamidate
4-pyrazinyl phosphorodiamidate
5-thiadiazolidyl phosphorodiamidate
3-pyrazolidyl diamidophosphorothionate
3-pyrazolyl phosphorodiamidate
pyrroyl phosphorodiamidate

2-pyrimidyl phosphorodiamidate
2-thiocyanomethyl phosphorodiamidate
3-thiazolidyl phosphorodiamidate
4-thiazolidyl phosphorodiamidate
2-(2-toluyl)ethyl phosphorodiamidate
3-formamidopropyl phosphorodiamidate
cyclobutyl phosphorodiamidate
2-(2,4-dihydroxyphenyl)ethyl phosphorodiamidate
octyl phosphorodiamidate
methylphosphorodiamidate
ethylmercaptomethyl phosphorodiamidate
2-(butanoyl)ethyl phosphorodiamidate
2-(benzothiazole) phosphorodiamidate
2-(benzofuranyl) phosphorodiamidate
3-(benzothienyl) diamidophosphorothionate
thiocarbamoylethyl diamidophosphorothionate
2-methyl-4-pyrone-3-phosphorodiamidate
6-methyl-2-pyrone-4-phosphorodiamidate
crotonyl phosphorodiamidate
2-pyrimidyl phosphorodiamidate
5,6,7,8-tetrahydronaphthylenyl phosphorodiamidate
propargyl phosphorodiamidate
2-benzimidazole phosphorodiamidate
dodecylphosphorodiamidate
nonylphosphorodiamidate
oleyl phosphorodiamidate
3-quinolinyl phosphorodiamidate
pyrazinyl phosphorodiamidate

Preferred for use in the practice of this invention are compounds in which:

X is oxygen or sulfur;

$R_1$, $R_2$, $R_3$ and $R_4$ are individually hydrogen methyl or ethyl.

$R_5$ is $-NR_6R_7$, $-OR_8$ or $-NR_9R_{10}$, wherein;

$R_6$ is alkyl having from 1 to about 4 carbon atoms;

$R_7$ is 3-pyridyl, 2 furyl, 2-naphthyl, cinnamenyl, benzyl, phenyl or phenyl substituted by one or more alkylmercapto nitro, cyano, hydroxy, amino, alkyl,

phenoxy, alkoxy, mercapto, chloro, bromo, and fluoro;

$R_8$ is alkyl, alkenyl, or aralkyl, either unsubstituted or substituted with one or more substituents at the alpha, beta and/or gamma carbon atoms relative to the oxygen atom to which the $R_8$ group is substituted;

$R_9$ is alkyl having from about 2 to 14 carbon atoms substituted with one or more chloro, fluoro, bromo iodo, alkoxy, cyano, aryloxy, alkylamino, amino, dialkylamino, arylamino, alkylmercapto, mercapto, isocyano, isocyanato, acyloxy, hydroxy, alkoxycarbonyl, quaternary ammonium radicals, thiocyano, and arylmercapto groups at the alpha, beta, and/or gamma carbon atoms relative to the nitrogen moiety; and

$R_{10}$ is $R_9$, 3-pyridyl, hydrogen, 2-furyl, 2-naphthyl, cinnamenyl, benzyl, phenyl or phenyl substituted by 3-nitro, 4-nitro, 2,3-dimethyl, 2,4-dimethyl, 2,4,6-trimethyl, 3-trifluoromethyl, 4-cyano, 4-phenyl, 4-methylmercapto, or 3-phenoxy

Particularly preferred for use in this invention are compounds in which:

X is oxygen or sulfur;

$R_1$, $R_2$, $R_3$, $R_4$ are hydrogen;

$R_5$ is $-NR_6R_7$, $-OR_8$ or $-NR_9R_{10}$ wherein;

$R_6$ is methyl;

$R_7$ is phenyl or phenyl substituted with 3-nitro, 4-nitro, 4-halo, 4-amino, 4-methyl, 4-cyano, 4-hydroxy, 4-trifluoromethyl, 4-trichloromethyl, 3-trifluoromethyl, 2-methyl, 2,3-dimethyl, 2,4 dimethyl, 2,4,6-trimethyl, 3-phenoxy, 3-methylmercapto, 4-methylmercapto, or 3-phenoxy;

$R_8$ is alkyl having from 1 to about 7 carbon atoms, alkenyl having from 2 to about 7 carbon atoms, or phenylalkyl having from 7 to about 14 carbon atoms either unsubstituted or substituted with one or more substituents on the alpha, beta and/or gamma carbon atoms relative to the oxygen atom wherein permissible substituents are selected from the group consisting of iodo, chloro, bromo, fluoro, phenoxy, p-nitrophenoxy, or

$-OSO_2OR$ and $-OSO_2R$ wherein R is alkyl or phenyl;

$R_9$ is alkyl having from about 1 to about 12 carbon atoms having at least one substituent on the alpha, beta or gamma carbon atoms relative to the nitrogen atom to which the $R_9$ group is bonded wherein the permissible substituents are selected from the group consisting of iodo, chloro, bromo, fluoro, or phenoxy;

$R_{10}$ is hydrogen.

Especially effacious compounds for use in the practice of this invention are N-methyl-N-phenyl phosphoric triamide, N methyl-N-(4-methoxyphenyl) phosphoric triamide, N-(2-chloroethyl) phosphoric triamide, N-(3-bromopropyl) phosphoric triamide, N-methyl-N-(4-nitrophenyl) phosphoric triamide, 3-chloropropyl phosphorodiamidate, 2,2,2-trifluoroethyl phosphorodiamidate, 2,2,2-trichloroethyl phosphorodiamidate, 2-bromoethyl phosphorodiamidate, 2-chloroethyl phosphorodiamidate, cyclohexyl phosphorodiamidate, allyl phosphorodiamidate, benzyl phosphorodiamidate, 1,3-dichloro-2-propyl phosphorodiamidate, 2,2,6,6-tetrachlorocyclohexyl phosphorodiamidate, and N-methyl-N-(4-hydroxyphenyl) phosphoric triamide.

Compounds for use in the practice of this invention can be prepared in accordance with the following reaction scheme:

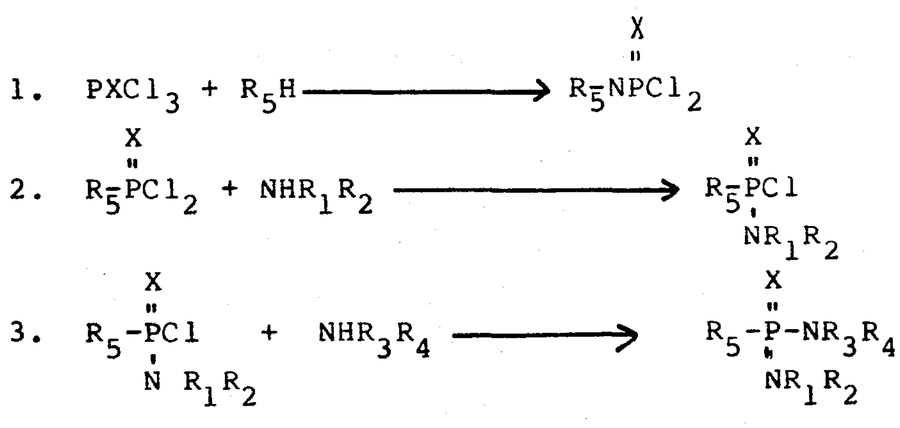

wherein X, $R_1$, $R_2$, $R_3$, $R_4$, and $R_5$ are as defined hereinabove.

The aforementioned reaction is described in more detail in East German Patent No. 128,315, Roth, H. J.,

et al., SYNTHESIS OF PHENYL PHOSPHORODIAMIDATES. PART I., Arch. Pharm., vol. 314, pp. 85-91, 1980, and references cited therein and E. Cherbuliez in "Organic Phosphorus Compounds", ed. G.M. Kosolapoff and L. Maier, Vol. 6 Chap. 15, Wiley-Interscience, 1973, and E. Fluck and W. Haubold, ibid., Chapter 16. Accordingly this will not be described herein in any great detail. Briefly stated, in each step of the three step reaction sequence, substantially equal molar amounts or excesses of the reactants are contacted neat or in an inert solvent, with or without a hydrogen chloride acid acceptor. Useful solvents include ethyl ether, carbon tetrachloride, methylene chloride, benzene, dioxane, toluene, xylene, and the like.

The acid acceptor employed is a basic material which can be either an inorganic or organic base. Suitable inorganic bases include alkali metal carbonates, such as sodium carbonate, potassium carbonate and the like. Organic bases which are useful and preferred for use in the practice of the invention are tertiary amines, as for example, pyridine, 1,4-diazabicyclo[2.2.2]octane, isoquinoline, trimethylamine, triethylamine, N-ethyl piperidine, quinoline, lutidine tributylamine, and the like. Alternatively, and excess of the amine reactant can be used as the acid acceptor.

Reaction temperatures and pressures are not critical. The reaction can be conveniently carried out at a temperature of from about -20°C to about 200°C, but is preferably carried out at a temperature of from about 25°C to about 125°C. The reaction can be carried out at atmospheric, sub-atmospheric or super-atmospheric pressure. For convenience, however, the reaction is carried out at atmospheric or autogeneous pressure.

The order in which the reactants are reacted indicated in the reaction scheme is for illustrative purposes only, and the order of reaction is not critical. The exact proportions of the reactants are not critical, some of the desired product being obtained

when the reactants are employed in any proportions. However, in going to completion, the reaction consumes the reactants and the hydrogen chloride acceptor in substantially equimolar proportions and the use of the reactants and the hydrogen chloride acceptor in such proportions is preferred.

Reaction times are not critical and can be varied widely depending on such factors as the reaction temperature, reactivity of the reactants, and the like. The reaction mixture is usually held within the desired reaction temperature range for a period of time, conveniently from about 2 to about 8 hours before cooling. Good yields are obtained with reaction times of from 4 to about 5 hours.

During the reaction, the hydrochloride salt of the hydrogen chloride acceptor forms and may precipitate from the mixture. This salt can be removed by such conventional procedures as extraction, filtration or centrifugation. The phosphorotriamide product can be separated by such conventional procedures as evaporation, and purified by conventional procedures such as distillation and extraction. The product separated as described above can be employed in the control of urease in the soil or in other applications in accordance with this invention or may be further purified by conventional procedures such as extraction and distillation.

EXAMPLE I

Preparation of N-Methyl N-phenyl Phosphoramidic Dichloride

A 500 mL three-necked flask was fitted with an $N_2$ inlet, thermometer and dropping funnel. The flask was flushed with nitrogen and charged with 150 mL dry ether and 31.1 g (0.203 mol) $POCl_3$. In the dropping funnel was placed a solution of 21.4 g (0.20 mol) N-methylaniline in 5 mL ether. The amine solution was added to the solution of $POCL_3$ (at -12° to -17°C) over 40 minutes. The temperature was allowed to rise slowly to room temperature and stirring continued for 2 h

0119494

thereafter. After filtering, volatiles were removed from the filtrate at reduced pressure. The 15.4 g (69% yield) of crude product was distilled (bp 96-98°C at 0.05 mm).

NMR: δ7.33 (s,5H), 3.25 (d,1.5H,$J_{\underline{CH_3}-N-\underline{P}}$ = 14.5Hz), 3.23(d) 1.5H, $JCH_3$-N-p=14.5Hz)

IR (neat): 3060, 2940, 1598, 1494, 1455, 1290, 1265, 1182, 1060, 1027, 910, 758, 710, 698 $CM^{-1}$.

EXAMPLE II

Preparation of N-Methyl-N-phenyl Phosphoric Triamide

A 250 mL flask was fitted with a dry ice condenser, thermometer and a gas inlet tube coming from a cylinder of ammonia. Methylene chloride (100 mL) was added and the solution cooled to 30° to -40°C. Ammonia (10.0 g, 0.59 mol) was bubbled in. The gas inlet tube was then replaced with a dropping funnel containing 8.1 g N-Methyl-N-phenyl phosphorodichloridate (0.036 mol) in 50 mL $CH_2Cl_2$. This was added over 20 min. The solution was warmed slowly to room temperature and filtered (3.8 g white solid). The solvent was removed under vacuum to give 6.5 g (98% yield) white solid, which was recrystallized from $CH_2Cl_2$. After drying over $P_2O_5$, the product had a mp of 97-99°C with some earlier softening.

Anal. Calcd. for $C_7H_{12}N_3OP$:C, 45.41% H, 6.53%; N, 22.69% Found: C, 45.12%; H, 6.41%; N, 23.07%.

NMR ($DMSO-d_6$) δ6.86 7.41 (m,5H), 3.86 (bs,4H), 3.03, (d,3H,$J_{\underline{CH_3}-N-\underline{P}}$ = 8.8 Hz).

EXAMPLE III

Preparation of N-Methyl-N-methoxyphenyl) Phosphoramidic Dichloride

A 250 mL flask was flushed with nitrogen via condenser and charged with 75 mL dry ether and 18 g (.117 mol) $POCl_3$. This was cooled to -15°C and a solution of 9.6 g (.07 ml) N-Methyl-p-anisidine (Aldrich) in 25 mL ether was added dropwise with stirring over 45 min. The solution was warmed to room temperature and stirred 2 h more. After filtering the reaction mixture, the fil-

trate was distilled affording 4.0 g of a yellow liquid bp 142°C at 0.08 mm (45% yield).

NMR ($CDCl_3$): an AA' XX' pattern from δ6.8-7.3 (4H), 3.8 (s,3H), 3.4 (d,3H, $J_{CH_3-N-P}$ = 15Hz).

EXAMPLE IV

Preparation of N-Methyl-4-methyoxyphenyl) Phosphoric Triamide

In a manner as described for the preparation of N-methyl-N-phenyl phosphoric triamide, 3.7 g (0.015 mol) of N-methyl-(4-methoxyphenyl) phosphorodichloridate in 20 mL $CH_2Cl_2$ was added to 8 g $NH_3$ in 50 mL $CH_2Cl_2$. Filtration gave 3.7 g white solid and 1 g yellow solid from the filtrate. Extraction of the 3.7 g portion with $CH_2Cl_2$ gave 2.1 g (67%) of the desired product, mp 122-124°C.

Anal. Calcd. for $C_8H_{14}N_3O_2P$:C, 44.65%; H, 6.56%; N, 19.54%

Found: C, 44.38%; H, 6.49%; N, 19.67%.

NMR (DMSO-$d_6$): AA'XX' quartet δ6.7-7.25 (4H) δ3.68 (s with bs underneath), 3.2 (bs) 2.95 (d,J=8-9Hz). With added $D_2O$, the broad singlets collapsed into a sharp singlet at 4.65. The intentities of the bands were then δ 6.7-7.3 ( 8, 4H), δ4.65 ( s, 4H), 3.68 (3H), 2.95 (d, 3H).

EXAMPLE V

Preparation of N-Methyl-N (4-nitrophenyl) Phosphoramidic Dichloride

p-Nitro-N-methylaniline (9.3 g, 0 061 mol) and 9 mL (.1 mol) $POCl_3$ were heated in 50 mL toluene to 90-95°C overnight. The solution was cooled and filtered. The volatiles were removed from the filtrate, giving 15.3 g of a purple viscous oil. NMR ($CDCl_3$) AA'XX' quartet from δ7.45-7.35 (4H), 3.37 (d,3H, J=14-15Hz). No N-H was observed in the NMR. Due to an expected very high boiling point, this material was not distilled but used directly in the preparation of N-Methyl-N-(4-nitrophenyl) phosphoric triamide in the following Example VI.

EXAMPLE VI

Preparation of N-Methyl-N-(4-nitrophenyl) Phosphoric Triamide

N Methyl-N-(4-nitrophenyl) phosphoramidic dichloride (15.3 g, 0.057 mol) was dissolved in 30 mL $CH_2Cl_2$ and added slowly to 120 mL $CH_2Cl_2$ at 0°C containing 10 g (0.59 mol) $NH_3$. The mixture was stirred 0.5 h more at 0 C, then warmed to room temperature overnight. The reaction mixture was filtered and the yellow solid was washed with 100 mL $CH_2Cl_2$, giving 16.8 g product containing by-product $NH_4Cl$. Pure product was obtained upon Soxhlet extraction of this solid using $CH_2Cl_2$. After drying the resultant yellow solid over $P_2O_5$, it had mp 158°C (with partial decomposition at 152°C).

Anal. Calcd. for $C_7H_{11}N_4O_3P$: C, 36.53%; H, 4.82%; N 24.34%.

Found: C, 36.49%; H, 4.65%; N, 24.20%.

NMR (DMSO-$d_6$-$D_2O$): AA'XX' quartet from δ7.4-8.2 (4H), 4.27 (s,4H), 3.16 (d,3H,J=9Hz).

EXAMPLE VII

Preparation of N-2-Chloroethyl Phosphoramidic Dichloride

A slurry is formed containing 8.5 g (0.073 mol) of 2-chloroethylamine hydrochloride and 26.7 g (0.174 mol) of phosphorus oxychloride. The slurry is heated for 3 hours at 100-115°C. During the heating step hydrogen chloride gas evolved, and after the heating period the reaction mixture became a homogeneous solution. The reaction mixture was distilled to provide 10.0 g of 2-chloroethyl phosphoroamidic dichloride, boiling point 116-118°C at 0.15 mm.

NMR ($CDCl_3$):δ 5.5 (bs, 1H), 3.2-3.8 (m,4H).

EXAMPLE VIII

Preparation of N-2 Chloroethyl Phosphoric Triamide

A solution of 9.3 g of 2-chloroethylphosphoramidic dichloride in 25 ml of $CH_2Cl_2$ was added over a 30 minute time period to a solution of 10 g of ammonia in 125 ml of $CH_2Cl_2$. During the addition the mixture was held at

a temperature of from -15°C to -20°C. The reaction mixture was allowed to warm slowly to 20°C over a 1.5 hr. time period, after which the solid product and by-product $NH_4Cl$ was collected by filtration. The crude reaction product was then subjected to Soxhlet extraction with $CH_2Cl_2$ to provide a pure product having a mp of 99-101°C after drying over $P_2O_5$.

NMR (DMSO-d6): δ 2.8-4.0 (complex multiplet);

IR (Nujol): 1560, 1310, 1245, 1200, 1155, 1130 and 930 $cm^{-1}$; and

Anal. Calcd for $C_2H_9ClN_3OP$: C, 15.25; H, 5.76; N, 26.67%; Found: C, 15.50; H, 5.96; N, 26.36%

EXAMPLE IX

Preparation of N,N-Bis-(2-Chloroethyl) Phosphoric Triamide

The compound of Example VIII was prepared by a modification of the procedure of O.M. Friedman and A.M. Seligman, J. Am. Chem. Soc. 1954, 76 p. 655. The crude reaction product was purified by extraction with $CH_2Cl_2$ rather than recrystallization from acetone to give a material of mp 119-120°C (which depends on the heating rate).

Anal. Calcd. for $C_4H_{12}Cl_2NO_3P$ C, 21.83; H, 5.50; N, 19.10; Found: C, 21.68; H, 5.64; N, 18.89.

EXAMPLE X

Preparation of N-(3-Bromopropyl) Phosphoramidic Dichloride

To a three-necked flask fitted with a thermometer, distillation column and a nitrogen tube was added 3-bromopropylamine hydrobromide (12 g, 0.055 mol) and 20 mL of $POCl_3$ (0.22 mol). The reaction mixture was heated to reflux under nitrogen overnight. Excess $POCl_3$ was removed at the pump at room temperature (attempted distillation resulted in decomposition). The crude dichloridate 15.4 g, was used directly in the procedure of the following Example V.

NMR ($CDCl_3$): δ 5.55 (bs, 1H), 3.1-3.8 (m, 4H) 2.0-2.35 (m, 2H).

EXAMPLE XI

Preparation of N-(3-Bromopropyl) Phosphoric Triamide

The crude 3-bromopropylphosphoramidic dichloride was added to a solution of 10 g of ammonia in 125 mL $CH_2Cl_2$ at -30°C. The resulting mixture of product and $NH_4Cl$ weighed 19.4 g. Extraction with $CH_2Cl_2$ gave a material which slowly discolored over several days, mp. 60-65°C.

NMR ($DMSO-d_6/D_2O$): δ 3.45-3.9 (m. 7H, with singlet for NH complicating assignment of triplet for $BrCH_2$), 2.87 (dt, 2H, δ $CH_2CH_2N$ = 7 Hz, δ $CH_2NHP$ = 11 Hz), 1.9 (m, 2H).

EXAMPLE XII

The Preparation of 3-Chloropropyl Phosphorodichloridate

A 250 mL flask was charged with 100 mL of $CH_2Cl_2$ and 18 mL of $POCl_3$(.2 mol). To this mixture was added at room temperature over 30 min, a solution of 10.0 g of (.10 mol) 3-chloro-1-hydroxypropane in 25 mL of $CH_2Cl_2$. The solution was then refluxed overnight under nitrogen. Distillation gave 19.4 g (87%) of a clear, colorless liquid, bp 64°C at 0.1-0.15 mm.

NMR ($CDCl_3$): δ 4.5 (dt, 2H, $J_{CH_2CH_2O}$ = 6 Hz $J_{CH_2OP}$ = 10 Hz); 3.7 (t, 2H), 2.25 (doublet of quintets, 2H, $J_{CH_2CH_2OP}$ = 1.5 Hz); and

IR (neat): 2985, 1300, 1020 $cm^{-1}$.

EXAMPLE XIII

The Preparation of 3-Chloropropyl Phosphorodiamidate

A solution of 19.1 g of (0.09 mol) 3-chloropropyl phosphorodichloridate in 25 mL of $CH_2Cl_2$ was added to a solution of 10 g of (0.59 mol) $NH_3$ in 150 mL of $CH_2Cl_2$ at -15 to -30 C. After the addition the mixture was allowed to warm slowly to room temperature, while the excess $NH_3$ vented. Filtering gave 24.9 g of crude material consisting of the desired product and $NH_4Cl$ (theoretical yield 25.2 g). Pure 3-chloropropyl phosphorodiamidate was obtained by extraction with methylene chloride. The 3-chloropropyl phosphorodiamidate product after drying over $P_2O_5$ had mp 111-112°C.

Anal. Calcd. for $C_3H_{10}ClN_2O_2P$: C, 20.88; H, 5.84; N, 16.23%, Found: C, 20.88; H, 6.00; N, 16.15%; and

NMR (DMSO-$d_6$/$D_2O$):δ 3.6-4.1 (m, 8H, includes singlet for $NH_2$), 2.0 (quintet, 2H).

## EXAMPLE XIV

### The Preparation of Allyl Phosphorodiamidate

To a solution of 18.1 g of (0.118 mol) $POCl_3$ in 100 mL of dry ether held at a temperature of 5 C was added a solution of 10.6 g (0.105 mol) of triethylamine in 15 mL of ether, followed by addition of a solution of 5.9 g (0.102 mol) allyl alcohol in 10 mL ether at 3-9°C over a period of 30 min. The resultant solution was stirred 15 min. and filtered. The volatiles were removed under reduced pressure to give 15.4 g of a pale yellow oil. Distillation was not attempted, but the crude oil was treated with $NH_3$ (10 g) in 150 mL of $CH_2Cl_2$ at -30 to -40°C. After warming to room temperature, the mixture was filtered and 18.7 g of a white solid was collected. The resultant solid was extracted with $CH_2Cl_2$ (Soxhlet) to give 6.2 g of (45% from allyl alcohol) glistening white crystals, mp 120-124°C.

NMR (DMSO-$D_6$/$D_2O$):δ 5.65-6.15 (m, 1H), 5.05-5.4 (m, 2H), 4.2-4.4 (m, 2H), 4.0 (s, 4H);

IR (nujol): 3340, 3230, 3120, 1645, 1570, 1170 $cm^{-1}$; and

Anal. Calcd. for $C_3H_9N_2O_2P$: C, 26.45; H, 6.67; N, 20.59% Found: C, 26.19; H, 6.68; N, 20.47%.

## EXAMPLE XV

### The Preparation of 2,2,2-Trifluoroethyl Phosphorodiamidate

To a solution of 17.3 g (.113 mol) of $POCl_3$ in 50 mL of toluene held at 0°C was added 7.9 g (.10 mol) of pyridine, followed by addition of 10.0 g (.10 mol) of trifluoroethanol, at a rate to maintain the temperature of the mixture at 0-10°C. The mixture was stirred one hour at ice bath temperature, and then overnight at room temperature. After filtering, the solution was distilled to give the desired 2,2,2 trifluoroethyl phosphorodichloridate, bp 140-146°C. The dichloridate, 4.5 g (0.21 mol) was treated with 10 g $NH_3$ in 50 mL $CH_2Cl_2$ at -40°C. After warming to room temperature, the product was filtered and purified by Soxhlet extraction with $CH_2Cl_2$ for two days. After drying over $P_2O_5$, the 2,2,2-trifluoroethyl phosphorodiamidate had mp 142-144°C.

NMR (DMSO-$d_6$): δ 4.0-4.5 (m); and

IR (nujol): 1310, 1280, 1175, 963 $cm^{-1}$.

EXAMPLE XVI

The Preparation of 2,2,2-Trichloroethyl Phosphorodiamidate

To 90 g (0.59 mol) of $POCl_3$ at 25°C was slowly added 72 g (0.48 mol) of 2,2,2-trichloroethanol over a two hour period. The mixture was heated and maintained at 100-125°C for 14 hours during which time 22 g (0.60 mol) of HCl was recovered in the water scrubber. The mixture was distilled to give 72 g (0.27 mol) of 2,2,2-trichloroethyl phosphorodichloridate, bp 84°C at 3 mm (57% yield).

The dichloridate ( 31 g, 0.12 mol) in 25 mL $CHCl_3$ was slowly added to 20 g (1.40 mol) of $NH_3$ dissolved in 50 mL $CHCl_3$ at -25°C. After warming to room temperature, the mixture was filtered to remove $NH_4Cl$ by-product, and the desired product recrystallized from $CHCl_3$ to give 21 g (0.094 mol) of desired 2,2,2-trichloroethyl phosphorodiamidate, mp 86-87°C (78% yield)).

NMR (DMSO-$d_6$/$D_2O$): δ4.4 (d, 2H, J = 5 $H_z$), 4.25 (S, 4H); and

IR (nujol): 1185 $cm^{-1}$.

EXAMPLE XVII

The Preparation of 2-Bromoethyl Phosphorodiamidate

2-Bromoethanol (18.9 g) was added to 47.2 g of $POCl_3$ and the mixture heated to 60-65°C until HCl evolution ceased (1.5 h). The reaction mixture was then distilled, to provide the desired 2-bromoethyl phosphorodichloridate having a bp of 90-92°C at 0.25 mm. The 2-bromoethyl phosphorodichloridate (15 g, .062 mol) was added to 12 g of $NH_3$ in 50 mL of $CH_2Cl_2$ at -20°C. After

warming to room temperature, the solids were filtered. Pure product was obtained by Soxhlet extraction of the crude solid using $CH_2Cl_2$(60% yield), mp 110-111°C.

NMR ($D_2O$): δ3.6 (t,2H), 4.2 (m, 2H), 4.7 (s, 4H).

EXAMPLE XVIII

The Preparation of 2-Chloroethyl Phosphorodiamidate

2-Chloroethanol (12.1 g, .15 mol) was added to 46.6 g (.304 mol) of $POCl_3$, and the mixture heated to 60-70°C until HCl evolution ceased (1.5 h). The mixture was then distilled to give 20.3 g of a colorless liquid bp 106-108°C at 1.7 mm. A solution of 15 g of the compound obtained above in 50 mL of $CH_2Cl_2$ was added to a solution of 12 g of $NH_3$ in 200 mL of $CH_2Cl_2$ at -20°C After warming to room temperature, the crude product was filtered (19.9 g). The solid product was taken up in 300 mL of fresh $CH_2Cl_2$ containing 16 mL of diethylamine, and the mixture refluxed overnight. The treatment was repeated, before collecting the pure product by filtration (8.0 g), mp 122-123 C.

NMR (DMSO-$d_6$):δ 3.2-4.1 (m). In $D_2O$, there is a triplet (2H), doublet of triplets (2H), and a singlet (4H).

EXAMPLE XIX

The Preparation of 1,3-Dichloro-2 propyl Phosphorodiamidate

To 85 g (0.56 mol) of $POCl_3$ at 25°C was slowly added 64.5 g (0.50 mol) of 1,3-dichloro-2-propanol over a 2 hour period. The mixture was heated to 120°C for 12 hours during which time 21 g (0.57 mol) of HCl was recovered in the water scrubber. The mixture was distilled and 50 g (0.20 mol) of 1,3-dichloro-2-propylphosphorodichloridate, bp 105-110°C at 5 mm was recovered in 40.6% yield.

The dichloridate, 25 g (0.10 mol), in 25 mL $CHCl_3$ was slowly added to 17 g (1.0 mol) of $NH_3$ in 50 mL $CHCl_3$ at -25°C. After warming to room temperature, the mixture was filtered to remove $NH_4Cl$. The product was recrystallized from $CHCl_3$ to give 15 g (0.072 mol) of

desired 1,3-dichloro-2-propylphosphorodiamidate, mp 70-72°C (71% yield).

EXAMPLE XX

The Preparation of Benzyl Phosphorodiamidate

To a 0°C solution of 25.1 g (0.16 mol) of $POCl_3$ in 100 mL of dry ether was added a solution of 10.6 g (0.105 mol) of triethylamine in 15 mL of ether over a period of 10 min followed by the cautious addition of 10.8 g (0.10 mol) benzyl alcohol in 15 mL of ether over a period of 0.5 hr at 0.10°C. The solution was stirred for 60 min. and filtered. The volatiles were removed under reduced pressures to provide 26.5 g of a crude oil. The product was treated with $NH_3$ (12 g) in 150 mL of $CH_2Cl_2$ at -30 °C. After warming to room temperature, the mixture was filtered to provide 28 gm of a solid material. The impure product was washed with water followed by a methanol washing. After drying the product had a mp of 166-167°C.

NMR ($DMSO-d_6/D_2O$): δ 7.33 (s, 5H), 4.8 (d, 2H, J = 6-7 Hz), 3.8 (s, 4H).

EXAMPLE XXI

The Preparation of Methyl Phosphorodiamidate

To a solution of 43 g (2.25 mol) of ammonia dissolved in 50 mL $CHCl_3$ at -25°C was slowly added 37 g (0.25 mol) of methyl phosphorodichloridate in 25 mL $CHCl_3$. After warming to room temperature, the mixture was filtered to provide 25 g of a solid material which was a mixture of $NH_4Cl$ and the desired methyl phosphorodiamidate. The mixture was tested for urease inhibition without further purification.

EXAMPLE XXII

The Preparation of Propyl Phosphorodiamidate

To a 0°C solution of 47 g (.31 mol) $POCl_3$ in 150 mL $CH_2Cl_2$ was added, over a period of 35 minutes, a solution of 9.0 g (0.15 mol) n-propanol in 50 mL $CH_2Cl_2$. The solution was warmed to 30-45°C for 2.5 h, during which time HCl evolved. Distillation afforded 22.9 g (86%) of propyl phosphorodichloridate bp 84-85°C at 2.2

0119494

mm. The dichloridate (17.7 g) was treated with 12 g $NH_3$ in 200 mL $CH_2Cl_2$ at -20°C. After warming to room temperature, the mixture was filtered to provide 24 g of a white solid. The impure product was refluxed in $CH_2Cl_2$ with 1.5 equivalents of diethylamine until $NH_3$ evolution ceased. The pure product was then collected by filtration in 39% yield, mp 140-142°C.

NMR ($DMSO-d_6$): δ 3.5-4.0 (m, $CH_2O$ and $NH_2$, 6H), 1.55 (m, 2H), 0.9 (t, 3H).

## EXAMPLE XXIII

## Preparation of Cyclohexylphosphorodiamidate

Cyclohexanol (6.2 ml, 6.01 g, 60 m mol) was added to heated (50-60°C) phosphorous oxychloride (9.3 ml, 15.3 g, 100 m mol) under nitrogen, and evolution of HCl gas was observed. After the addition, the reaction mixture was heated to 80-90°C for 45 minutes, cooled, and distilled. The fraction boiling at 65-74°C at 5 torr (1.9 g, 15% yield) is the desired cyclohexyl phosphorodichloridate.

IR (neat) 2935 and 2860 ($CH_2$), 1325 (P=O) $cm^{-1}$.

Cyclohexyl phosphorodichloridate (1.8 g, 8.3 m mol) was dissolved in anhydrous ether (50 ml) and the solution added to a saturated solution of ammonia in ether (250 ml) at 0°C. A white precipitate formed which was a mixture of the desired cyclohexyl phosphorodiamidate (62.5%) and ammonium chloride (37.5%) was separated by filtration, washed with ether, and dried in vacuum, weight 1.9 g.

## EXAMPLE XXIV

## Preparation of 2,2,6,6-Tetrachlorocyclohexyl Phosphorodiamidate

The alcohol 2,2,6,6-tetrachlorocyclohexanol (11.9 g, 50 m mol) and phosphorus oxychloride (6.0 ml, 9.9 g, 65 m mol) were dissolved in 200 ml of anhydrous ether under nitrogen. The solution was cooled to -10°C, and pyridine (4.0 ml, 50 m mol) in 20 ml of ether was added. The reaction mixture was allowed to warm to room temperature with stirring. The precipitated solid was

collected by filtration. The filtrate was added to a saturated solution of ammonia in ether at 0°C (500 ml), to provide a white solid which was dried in vacuum, weight 13.6 g. The pure product was obtained by extraction with methylene chloride.

'H NMR (pyridine - $d_5$): δ 4.6-6.3 (br, 4H, NH), 4.6 (S, 1H, CH), 1.3-3.0 (m, 6H, $CH_2$);

IR (KBr): 3445 and 3290 (NH), 1210 and 1110 (P=O) $cm^{-1}$.

## EXAMPLE XXV

Several representative N-alkyl-N-aryl phosphoric triamide compounds in which $R_5$ is $-NR_6R_7$ useful in the practice of this invention were tested to determine their relative effectiveness or urease inhibitors. The inhibition tests were run in a New York soil (Cazenovia sandy loam, pH 7.2). Evaluations (run in triplicate) consisted of applying 800 and 20 micrograms of test compund in 5 mL water and 42.8 mg urea in 1 mL water to 20 g air-dry soil in a glass bottle. The bottle was capped with perforated aluminum foil and incubated at 25°C for 3 days prior to extraction with 100 mL 2M KCl containing 0.5 mg phenylmercuric acetate. The extracts were then analyzed for remaining urea using an auto analyzer. Percent inhibition was calculated as

$$\% \text{ Inhibition} = [1-(A-B/A-C)] \times 100$$

where A is urea recovered from unincubated sample (urea added to soil and immediately extracted); B is urea recovered from inhibited sample; and C is urea recovered from the control (uninhibited sample).

The results of these test are set forth in the following TABLE I.

TABLE I

Urease Inhibition by Phosphorotriamides

$R_6R_7NPO(NH_2)_2$

| Ex. | $R_6$ | $R_7$ | %Inhibition | |
|---|---|---|---|---|
| | | | 800µmg | 20µmg |
| 1 | 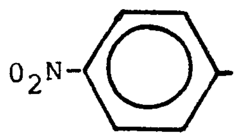 | $-CH_3$ | 95 | 59 |
| 2 | 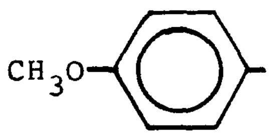 | $-CH_3$ | 47 | - |
| 3 | 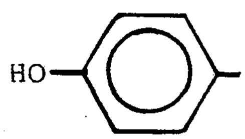 | $-CH_3$ | 86 | - |

EXAMPLE XXVI

Employing the procedure of EXAMPLE XXV a series of test were conducted to show improved efficiency of N-aliphatic-N-arylphosphoric triamide compounds in which $R_5$ is $-NR_6R_7$ at elevated temperature as compared to the efficiency of phenylphosphorodiamidate, a prior art urease inhibitor. This test was conducted similarly to the test previously described, but soil samples were taken every two days and analyzed for urea content. The results of these tests are set forth in the Figure.

The figure shows that N-methyl-N-(4-nitrophenyl) phosphoric triamide is an excellent inhibitor even when soil temperatures are 35°C(95°F) for a period of 12 days. By comparison, phenyl phosphorodiamidate, a known

compound which has an excellent urease inhibiting effect at 25°C, is much less effective at 35°C, allowing essentially complete urea hydrolysis after only 6 days.

## EXAMPLE XXVII

Employing the procedure of EXAMPLE XXV a series of test were conducted to illustrate the superior efficacy of the N-aliphatic-N-aryl phosphoric triamide compounds in which $R_5$ is $-NR_6R_7$ used in the practice of the invention as compared to other N-arylphosphoric triamide compounds. The results of these tests are set forth in the following TABLE II.

TABLE II

Urease Inhibitors by Phosphorotriamide

, $R_6R_7PO(NH_2)_2$

| Ex. | $R_6$ | $R_7$ | % Inhibition 800µmg | 20µmg |
|---|---|---|---|---|
| VII | 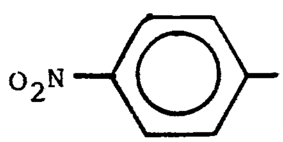 | $-CH_3$ | 95 | 59 |
| Comp I | 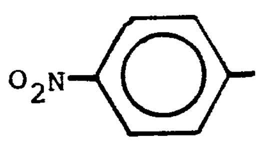 | H- | 81 | 30 |
| Comp II | 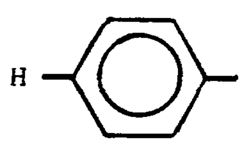 | H- | 74 | 19 |

## EXAMPLE XXVIII

Several phosphorodiamidate compounds in which $R_5$ is $-OR_8$ were evaluated to determine their efficacy as

urease inhibitors. The inhibition tests were run in a New York soil (Cazenovia sandy loam, pH 7.2) or in Wisconsin soil (Plano silt loam, pH 5.4). Evaluations (run in triplicate) consisted of applying 800 micrograms of test compound in 5 mL of water and 42.8 mg of urea in 1 mL of water to a 20 g of air-dry soil in a glass bottle. The bottle was capped with perforated aluminum foil and incubated at 25°C for three days prior to extraction with 100 mL of a 2M KCl solution containing 0.5 mg phenylmercuric acetate. The extracts were then analyzed for remaining urea using an autoanalyzer. Percent inhibition was calculated as

$$\% \text{ Inhibition} = [1 - (A-B/B-C)] \times 100$$

where A is urea recovered from unincubated sample (urea added to soil and immediately extracted); B is urea recovered from inhibited sample; and C is urea recovered from the control (uninhibited sample).

The results of these tests are set forth in the following Table III.

TABLE III

Urease Inhibition By Phosphorodiamidate Compounds, $R_8OPO(NH_2)_2$

| Experiment | $R_8$ | % Inhibition Cazenovia Soil | % Inhibition Wisconsin Soil |
|---|---|---|---|
| 1 | 2,2,2-Trifluoroethyl | 97 | 90 |
| 2 | 2,2,2-Trichloroethyl | 97 | 87 |
| 3 | 2-Bromoethyl | 85 | - |
| 4 | 2-Chloroethyl | 84 | - |
| 5 | 1,3-Dichloro-2-propyl | 72 | 49 |
| 6 | Allyl | 65 | 38 |
| 7 | Benzyl | 69 | 20 |
| 8 | 3-Chloropropyl | 41 | 22 |
| 9 | Methyl | 34 | - |
| 10 | Propyl | 15 | - |
| 11 | Cyclohexyl | 85 | - |

| | | | |
|---|---|---|---|
| 12 | 2,2,6,6-Tetra-chlorocyclohexyl | 38 | - |

EXAMPLE XIX

Several representative N-substituted alkyl phosphoric triamide in which $R_5$ is $NR_9R_{10}$ useful in the practice of the invention were evaluated to determine their effectiveness as urease inhibitors. The inhibition tests were run in a New York State soil (Cazenovia sandy loam, pH 7.2). Evaluations (run in triplicate) consisted of applying 800 micrograms of test compound in 5 mL of water and 42.8 mg urea in 1 mL of water to 20 g of air-dry soil in a glass bottle. The bottle was capped with perforated aluminum foil and incubated at 25°C for 3 days prior to extraction with 100 mL of 2M KCl solution containing 0.5 mg of phenylmercuric acetate. The extracts were then analyzed for remaining urea using an autoanalyzer. Percent inhibition was calculated as

$$\% \text{ Inhibition} = (1 - \frac{A-B}{A-C}) \times 100\%$$

where A is urea recovered from unincubated sample (urea added to soil and immediately extracted); B is urea recovered from inhibited sample; and C is urea recovered from the control (uninhibited sample).

The results of these tests are set forth in the following Table IV.

TABLE IV

PHOSPHORIC TRIAMIDES, $R_9R_{10}NPO(NH_2)_2$

INHIBITORS OF SOIL UREASE

| Experiment | $R_9$ | $R_{10}$ | % Inhibition 40 microgram per gram soil | % Inhibition 1 microgram per gram soil |
|---|---|---|---|---|
| 1 | $ClCH_2CH_2-$ | -H | 100 | 77 |
| 2 | $ClCH_2CH_2-$ | $ClCH_2CH_2-$ | 30 | - |
| 3 | $BrCH_2CH_2CH_2-$ | H | 99 | 83 |

EXAMPLE XXX

A series of tests were conducted to show the superior performance of the phosphorictriamide compounds in which $R_5$ is $NR_9R_{10}$ used in the present invention over

certain urease inhibitors known in the prior art. Employing the procedure of Example XIX, the urease inhibiting activity at 35°C of the prior art urease inhibitor, phenyl phosphorodiamidate, and N-(2-chloroethyl) phosphoric triamide were evaluated. In the evaluation, soil samples were taken every two days and analyzed for urea content. The results of this evaluation are set forth in Figure 2.

Figure 2 shows that N-(2-chloroethyl) phosphoric triamide is an excellent inhibitor even when soil temperatures are 35°C (95°F) for a period of 12 days. By comparison, phenyl phosphorodiamidate, a well known compound which has an excellent inhibitory effect on urease at 25°C, is much less effective at high soil temperatures, allowing essentially complete urea hydrolysis after only six days.

WHAT IS CLAIMED IS:

1. A urease inhibiting composition comprising and a urease inhibiting effective amount of one or more phosphoro compounds of the formula:

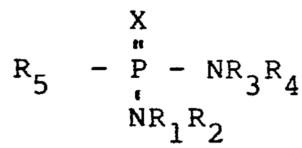

wherein:

X is oxygen or sulfur;

$R_3$, $R_4$, $R_5$ and $R_6$ are individually hydrogen or alkyl having from 1 to 4 carbon atoms.

$R_5$ is $-NR_6R_7$, $-OR_8$ or $-NR_9R_{10}$ wherein,

$R_6$ is alkyl, alkenyl, alkynyl, cycloalkyl, cycloalkenyl or aralkyl.

$R_7$ is heterocycle, aryl, or aryl substituted with one or more substituents selected from the group consisting of trihalomethyl, alkyl, halo, phenoxy, phenyl, nitro, cyano, amino, alkylamino, dialkylamino, alkoxy, amido, mercapto, alkylmercapto, arylmercapto, alkylcarbonyl, arylcarbonyl, quaternary ammonium radicals, carboxy, alkylcarboxy, carbonamide, isocyano, isocyanato, $(NH_2)_2P(O)O-$, and $(NH_2)_2P(O)NH-$,$H_2NSO_2-$;

$R_8$ is alkyl, aralkyl, cycloalkyl, heterocycle, cycloalkenyl, alkenyl or alkynyl either unsubstituted or substituted with one or more halo, hydroxy, thiocyano, heterocycle, alkylamino, dialkylamino, alkoxy, nitro, isocyano, quaternary ammonium, arylamino, alkanoyl, trihalomethyl, aryloxy, cyano, amino, isocyanato, acyloxy, $-ONO_2$, $-SO_2OH$, mercapto, arylmercapto, alkylmercapto, carboxyalkyl, $-OPO(OH)_2$, $-OB(OH)_2$ or $-OPO(OR)OH$, $-OPO(OR)_2$, $-OSO_2OR$, $-SO_2R$, and $-OSO_2R$, wherein R is aliphatic or aryl, or a combination thereof;

$R_9$ is alkyl substituted with one or more "nucleophilic substituents"; and

$R_{10}$ is $R_9$, hydrogen, or substituted or unsubstituted cycloalkenyl, alkenyl, alkynyl, cycloalkyl, aralkyl, alkyl, aryl or alkaryl wherein

permissible substituents are one or more trihalomethyl, alkyl, halogen, naphthoxy, phenoxy, arylcarbonyl, phenyl, nitro, cyano, amino, alkylamino, dialkylamino, arylmercapto, alkoxy, mercapto, alkylmercapto, alkylcarbonyl, alkoxycarbonyl, arylcarbonyl, carboxy, arylamino, diarylamino, or carbonamide groups.

2. A composition according to claim 1 wherein said urease inhibiting amounts is at least about 0.00001 weight percent based on the total weight of the composition.

3. A composition according to claim 1 wherein X is oxygen.

4. A composition according to claim 1 wherein $R_5$ is $-NR_6R_7$, wherein $R_6$ is alkyl and $R_7$ is substituted phenyl.

5. A composition according to claim 1 wherein $R_5$ is $-OR_8$ wherein $R_8$ is alkyl having more than one halogan substituent substituted at the alpha, beta and/or gamma position relative to the oxygen atom to which $R_8$ is substituted.

6. A composition according to claim 5 wherein said $R_8$ is selected from the group consisting of 2-haloethyl, 2,2-dihaloethyl, 2,2,2-trihaloethyl, halomethyl, dihalomethyl, trihalomethyl, 2-halopropyl, 2,2-dihalopropyl, 2-halobutyl and 2,2-dihalobuty.

7. A composition according to claim 1 wherein $R_5$ is $-NR_9R_{10}$ wherein $R_{10}$ is hydrogen and $R_9$ is alkyl substituted with one or more halogen on the alpha, beta and/or gamma carbon atoms relative to the nitrogen atom to which $R_9$ is substituted.

8. A composition according to claim 1 wherein said one or more phosphoro compounds are selected from the group consisting of [N-methyl-(4-aminophenyl)]phosphoric triamide, [N-methyl-N-(4-cyanophenyl)]phosphoric triamide, [N-methyl-N-(3-trifluoromethylphenyl)]phosphoric triamide, [N-methyl-N-(4-hydroxyphenyl)]-phosphoric triamide [N-methyl-N-phenyl] phosphoric triamide, [N-methyl-N-(4-methoxyphenyl)]phosphoric

triamide [N-methyl-N-(4-nitrophenyl)]phosphoric triamide.

9. A method of inhibiting the urease catalyzed hydrolysis of urea at a situs which comprises applying to said situs a urease inhibiting effective amount of one or more phosphorocompounds of the formula:

$$\begin{array}{ccc} & X & \\ & \| & \\ R_5 - & P & - NR_3R_4 \\ & | & \\ & NR_1R_2 & \end{array}$$

wherein:

$R_1$, $R_2$, $R_3$ and $R_4$ are individually hydrogen or alkyl having from 1 to 4 carbon atoms.

$R_5$ is $-NR_6R_7$, $-OR_8$ or $-NR_9R_{10}$ wherein;

$R_6$ is alkyl, alkenyl, cycloalkyl, cycloalkenyl or aralkyl;

$R_7$ is heterocycle, aryl or aryl substituted with one or more substituents selected from the group consisting of trihalomethyl, alkyl, halo, phenoxy, phenyl, nitro, cyano, amino, alkylamino, dialkylamino, alkoxy, amido, mercapto, alkylmercapto, arylmercapto, alkylcarbonyl, arylcarbonyl, quaternary amonium radicals, carboxy, alkylcarboxy, carbonamide, isocyano, isocyanato, $(NH_2)_2P(O)O-$, $(NH_2)_2P(O)NH-$ and $H_2NSO_2-$;

$R_9$ is alkyl substituted with one or more "nucleophilic substituents"; and

$R_{10}$ is $R_9$, hydrogen, or substituted or unsubstituted cycloalkenyl, alkenyl, alkynyl, cycloalkyl, aralkyl, alkyl, aryl or alkaryl wherein permissible substituents are one or more trihalomethyl, alkyl, halogen, naphthoxy, phenoxy, arylcarbonyl, phenyl, nitro, cyano, amino, alkylamino, dialkylamino, arylmercapto, alkoxy, mercapto, alkylmercapto, alkylcarbonyl, alkoxycarbonyl, arylcarbonyl, carboxy, arylamino, diarylamino, or carbonamide groups.

10. An improved fertilizer composition which comprises urea and/or one or more urea precursor compounds capable of forming urea in situ when subjected to the use condition of the composition and a urease inhibiting

effective amount of one or more phosphoro compounds of the formula:

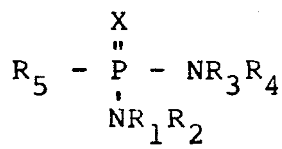

wherein:

X is oxygen or sulfur;

$R_1$, $R_2$, $R_3$ and $R_4$ are individually hydrogen or alkyl having from 1 to 4 carbon atoms.

$R_5$ is $-NR_6R_7$, $-OR_8$ or $-NR_9R_{10}$, wherein:

$R_6$ is alkyl, alkenyl, alkynyl, cycloalkyl, cycloalkenyl, or aralkyl.

$R_7$ is heterocycle, aryl, or aryl substituted with one or more substituents selected from the group consisting of trihalomethyl, alkyl, halo, amido, phenoxy, phenyl, nitro, cyano, amino, alkylamino, dialkylamino, alkoxy, alkylcarboxy, mercapto, isocyano, alkylmercapto, arylmercapto, alkylcarbonyl,isocyanato, arylcarbonyl, quaternary ammonium radicals, carboxy, carbonamide, $(NH_2)_2P(O)O-$, $(NH_2)_2P(O)NH-$ or $H_2NSO_2-$;

$R_9$ is alkyl substituted with one or more "nucleophilic substituents"; and

$R_{10}$ is $R_9$, hydrogen, or substituted or unsubstituted cycloalkenyl, alkenyl, alkynyl cycloalkyl, aralkyl, alkyl, aryl or alkaryl wherein permissible substituents are one or more trihalomethyl, alkyl, halogen, naphthoxy. phenoxy, arylcarbonyl, phenyl, nitro, cyano, amino, alkylamino, dialkylamino arylmercapto, alkoxy, mercapto, alkylmercapto, alkylcarbonyl, alkoxycarbonyl, arylcarbonyl, carboxy, arylamino, diarylamino, or carbonamide groups.

FIG. 1

UREA HYDROLYZED VS TIME AT 35° C, USING 10 MICROGRAMS INHIBITOR PER GRAM SOIL

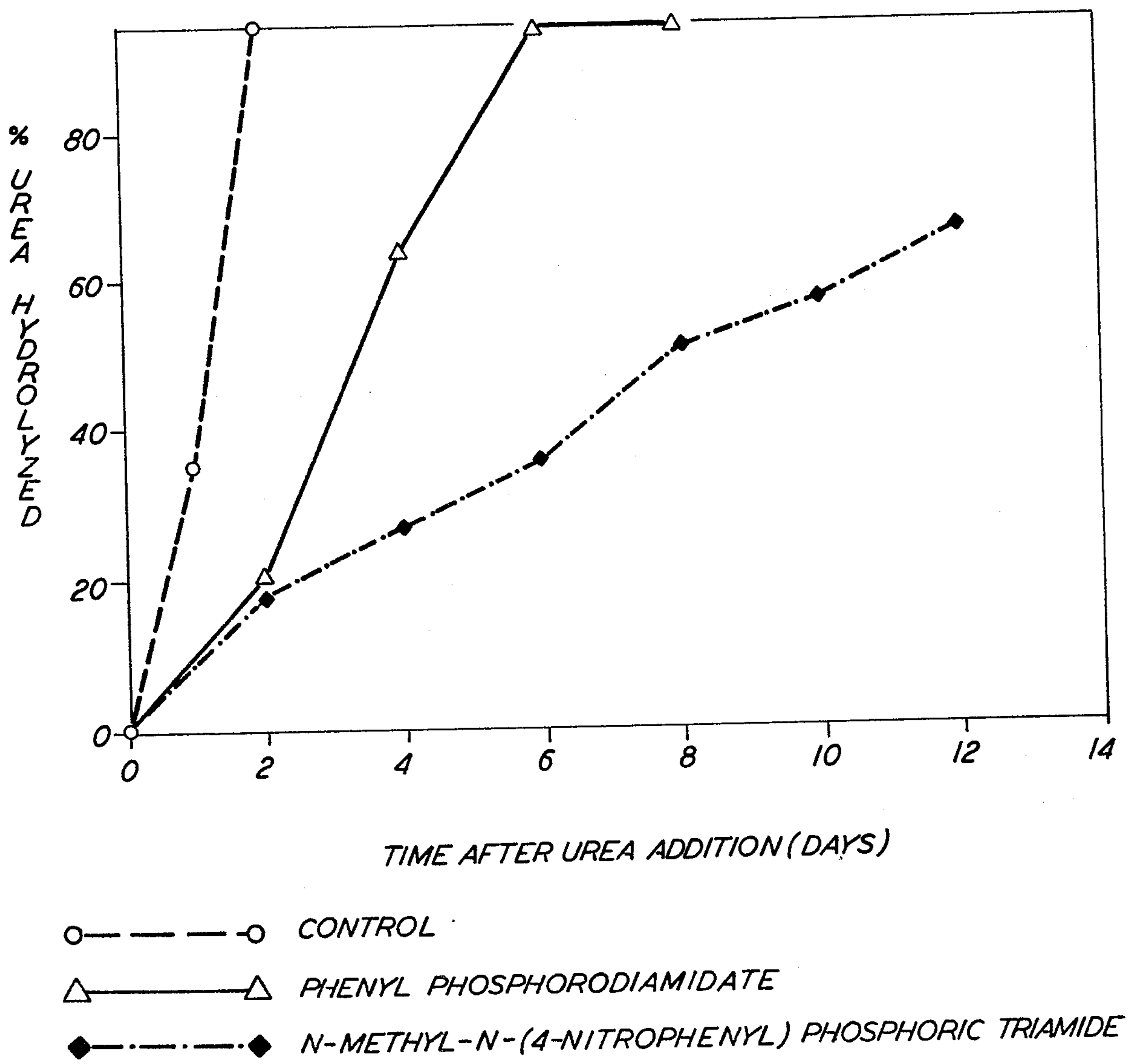

FIG. 2

UREA HYDROLYZED VS TIME AT 35°C, USING 10 MICROGRAMS INHIBITOR PER GRAM SOIL

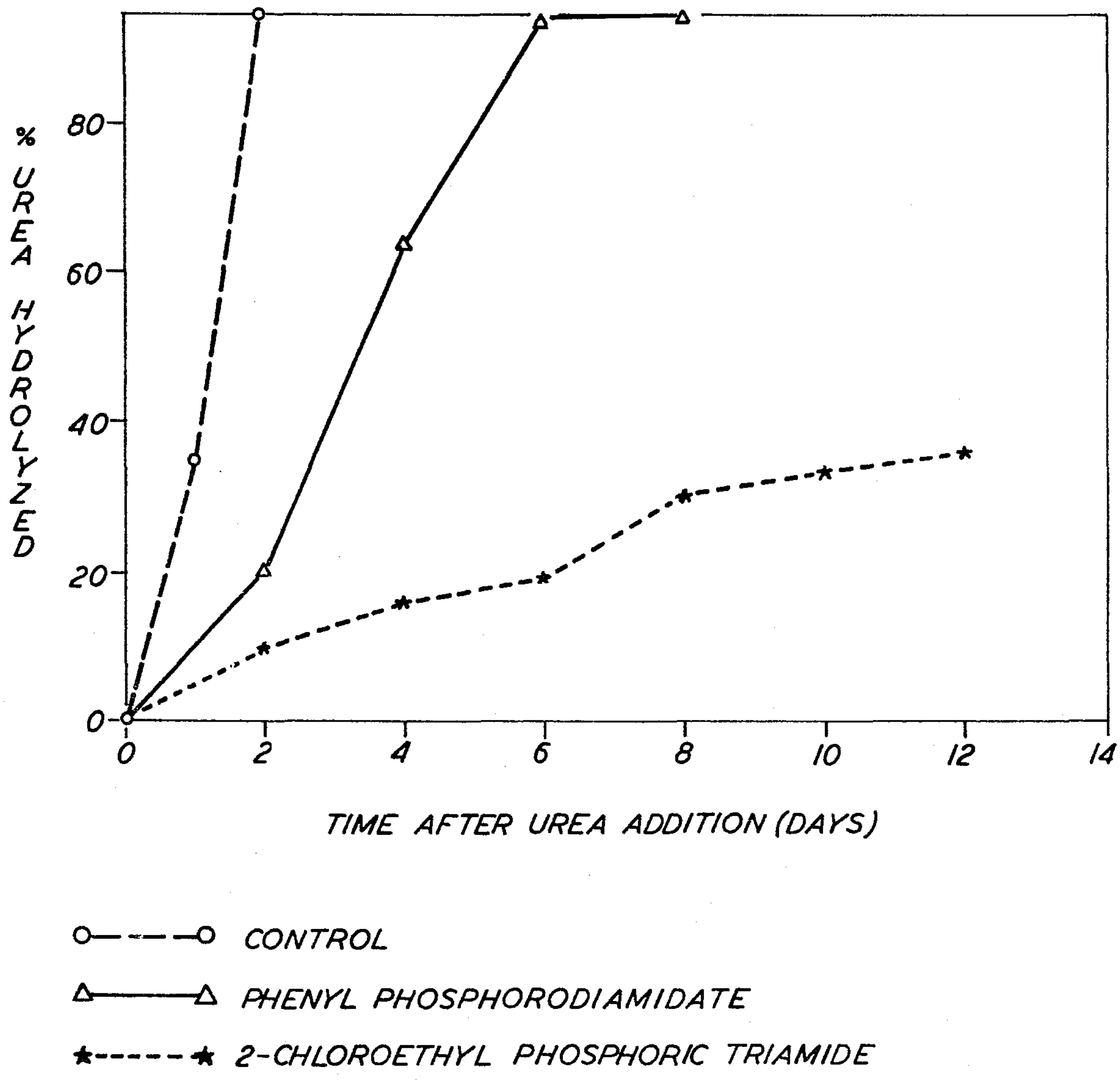

European Patent Office

# EUROPEAN SEARCH REPORT

0119494

Application number

EP 84 10 1739

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| D,Y | DD-A- 142 714 (VEB STICKSTOFFWERK PIESTERITZ)<br>* Examples 1-9 *<br>--- | 1-10 | C 05 G 3/08<br>C 07 F 9/22<br>C 07 F 9/24 |
| D,Y | DD-A- 122 177 (Dipl.-Chem. Dr. PAUL HELD)<br>* Claims; table 1 *<br>--- | 1-10 | |
| D,Y | GB-A-1 494 774 (VEB FAHLBERG-LIST MAGDEBURG CHEMISCHE UND PHARMAZEUTISCHE FABRIKEN)<br>* Page 1, line 76 - page 2, line 34; table 1 *<br>--- | 1-9 | |
| D,Y | US-A-4 242 325 (A.V. BAYLESS)<br>* Whole document *<br>--- | 1-9 | TECHNICAL FIELDS SEARCHED (Int. Cl. 3) |
| A | FR-A-1 551 475 (MONTECATINI EDISON S.p.A.)<br>* Abstract *<br>--- | 1 | C 05 G 3/00<br>C 07 F 9/00 |
| A | US-A-3 324 204 (H. TOLKMITH)<br>* Column 1, lines 9-34 *<br>--- | 1 | |
| D,A | GB-A- 830 800 (FARBENFABRIKEN BAYER AG)<br>* Claims *<br>----- | 1 | |

The present search report has been drawn up for all claims

| Place of search | Date of completion of the search | Examiner |
|---|---|---|
| THE HAGUE | 07-06-1984 | BESLIER L.M. |

**CATEGORY OF CITED DOCUMENTS**

- X : particularly relevant if taken alone
- Y : particularly relevant if combined with another document of the same category
- A : technological background
- O : non-written disclosure
- P : intermediate document
- T : theory or principle underlying the invention
- E : earlier patent document, but published on, or after the filing date
- D : document cited in the application
- L : document cited for other reasons
- & : member of the same patent family, corresponding document

EPO Form 1503. 03.82